# EUROPÄISCHE PATENTSCHRIFT

(11) **EP 4 291 433 B1**
(45) Veröffentlichungstag und Bekanntmachung des Hinweises auf die Patenterteilung: **11.03.2026**
(21) Anmeldenummer: 22700828.1
(22) Anmeldetag: 18.01.2022
(51) Int. Cl.: B60K 35/00

(54) **VERFAHREN ZUM BETREIBEN EINES KRAFTWAGENS SOWIE KRAFTWAGEN**
METHOD FOR OPERATING A MOTOR VEHICLE, AND MOTOR VEHICLE
PROCÉDÉ DE FONCTIONNEMENT D'UN VÉHICULE À MOTEUR, ET VÉHICULE À MOTEUR

(30) Priorität: 09.02.2021 DE 102021201227
(43) Veröffentlichungstag der Anmeldung: 20.12.2023
(73) Patentinhaber: VOLKSWAGEN AKTIENGESELLSCHAFT, 38440 Wolfsburg (DE)
(72) Erfinder: YAVUZ, Sema, 38106 Braunschweig (DE); VIEIRA, Eduardo Luiz, 10117 Berlin (DE); SHIN, Hyein, 14057 Berlin (DE)
(86) Internationale Anmeldenummer: PCT/EP2022/050998
(87) Internationale Veröffentlichungsnummer: WO 2022/171399

(56) Entgegenhaltungen:
- DE-B3- 102014 019 158
- FR-A1- 3 052 884
- FR-A1- 3 056 468
- FR-A1- 3 058 938
- US-A1- 2016 320 939
- US-B2- 10 732 737
- US-B2- 9 504 116

## Beschreibung

Die vorliegende Erfindung betrifft ein Verfahren zum Betreiben eines Kraftwagens sowie einen Kraftwagen, mit einer Bedienvorrichtung und mit mehreren Fahrzeugkomponenten.

Aus der DE 10 2018 113 140 A1 ist bereits ein Verfahren bekannt, bei welchem Eingabedaten eines Fahrzeugnutzers erfasst und an eine Verarbeitungseinheit übertragen werden. Diese Eingabedaten des Fahrzeugnutzers werden basierend auf einem für das Fahrzeug und den Fahrzeugnutzer spezifischen Kommunikationsprofil zu Ausgabedaten verarbeitet, welche an das Fahrzeug übertragen werden. Das Kommunikationsprofil kann wenigstens ein Fahrzeugnutzerprofil beinhalten. Das Fahrzeugnutzerprofil kann alle für einen Fahrzeugnutzer spezifischen Eigenschaften wie bevorzugte Routenkriterien, bevorzugte Klimatisierung, Sitz, Infotainment- und Kommunikationseinstellungen sowie weitere Präferenzen umfassen. Eine oder mehrere Komponenten des Fahrzeugs können basierend auf den Ausgabedaten gesteuert werden. Als Komponenten können Mittel zur Sitzverstellung, Mittel zur Bereitstellung einer Massage, Mittel zur Klimatisierung des Fahrzeugs, Mittel zur Innenbeleuchtung, Mittel zur Einstellung von Duftoptionen und Mittel zur Aufnahme und/oder Wiedergabe von Audio basierend auf den Ausgabedaten gesteuert werden.

Die US 9 504 116 B2 offenbart eine Steuerung eines Klimaanlagensystems für ein Kraftfahrzeug. Die Steuerung umfasst Schalter, Stimmungslampen und ein Display. Einer der Schalter ist als Drehschalter ausgeführt, der ein Temperatureinstellschalter ist. Wenn mittels des Temperatureinstellschalters eine Fahrzeuginneneinstelltemperatur eingegeben wird, werden die Stimmungslampen in Abhängigkeit von einer Gebläsedrehzahl oder der Fahrzeuginneneinstelltemperatur gesteuert. Dadurch werden Lichtemissionsfarben der Stimmungslampen geändert.

Aufgabe der vorliegenden Erfindung ist es, eine Lösung zu schaffen, welche ein besonders einfaches Individualisieren jeweiliger Einstellungen von Fahrzeugkomponenten eines Kraftwagens gleichzeitig ermöglicht.

Diese Aufgabe wird erfindungsgemäß durch die Gegenstände der unabhängigen Patentansprüche gelöst. Weitere mögliche Ausgestaltungen der Erfindung sind in den Unteransprüchen, der Beschreibung und den Figuren offenbart.

Die Erfindung betrifft ein Verfahren zum Betreiben eines Kraftwagens, insbesondere eines Personenkraftwagens, bei welchem mittels einer Bedienvorrichtung eine erste Benutzereingabe und eine zweite Benutzereingabe empfangen werden und in Abhängigkeit von der ersten Benutzereingabe und der zweiten Benutzereingabe wenigstens eine Fahrzeugkomponente, insbesondere mehrere Fahrzeugkomponenten, des Kraftwagens eingestellt werden. Die erste Benutzereingabe charakterisiert eine Auswahl eines einzustellenden Ambientemodus aus mehreren vorgegebenen Ambientemodi. Das bedeutet, dass eine Person über die erste Benutzereingabe vorgeben kann, welcher Ambientemodus aus den mehreren vorgegebenen Ambientemodi ausgewählt ist, um im Kraftwagen eingestellt zu werden. Die jeweiligen Ambientemodi definieren jeweils eine Gruppe von gemeinsam einzustellenden, jeweils eine Komfortfunktion bereitstellenden Fahrzeugkomponenten des Kraftwagens. Das bedeutet, dass durch jeden der vorgegebenen Ambientemodi eine Gruppe an Fahrzeugkomponenten vorgegeben ist, welche gemeinsam einzustellen sind. Bei den jeweiligen die Komfortfunktionen bereitstellenden Fahrzeugkomponenten kann es sich beispielsweise um eine Beleuchtungseinrichtung und/oder um eine Belüftungseinrichtung und/oder um eine Lautsprechereinrichtung und/oder um eine Massageeinrichtung und/oder um eine Bildschirmeinrichtung handeln, welche dazu eingerichtet sind, die jeweiligen Komfortfunktionen für Fahrzeuginsassen des Kraftwagens zur Verfügung zu stellen. Die jeweiligen Ambientemodi können durch eine erwünschte Wirkung auf Fahrzeuginsassen des Kraftwagens charakterisiert sein. Das bedeutet, dass wenigstens ein anregender Ambientemodus vorgesehen sein kann, welcher eine Stimmung von Fahrzeuginsassen anregen soll. Alternativ oder zusätzlich kann ein beruhigender Ambientemodus vorgesehen sein, mittels welchem die Stimmung der Fahrzeuginsassen beruhigt werden soll.

Die zweite Benutzereingabe definiert eine ausgewählte, einzustellende Intensität des ausgewählten Ambientemodus. Hierbei gibt die jeweilige ausgewählte Intensität jeweilige einzustellende Werte für die Gruppe an Fahrzeugkomponenten vor. Über das jeweilige Einstellen der Intensität können die Werte der durch den ausgewählten Ambientemodus vorgegebenen Fahrzeugkomponenten gemeinsam eingestellt werden. Hierbei kann über die jeweilige ausgewählte Intensität der jeweilige Wert insbesondere graduell angepasst und eingestellt werden. Beispielsweise kann durch den ausgewählten Ambientemodus vorgegeben werden, dass mittels der Beleuchtungseinrichtung als Fahrzeugkomponente ein Lichtsignal in einer vorgegebenen Farbe bereitgestellt wird. Über das Einstellen der Intensität kann eine Farbintensität und/oder eine Helligkeit des durch die Beleuchtungseinrichtung bereitgestellten Lichtsignals angepasst werden. Beispielsweise kann eine von der Lautsprechereinrichtung wiedergegebene Musik hinsichtlich jeweiliger auszugebender Lieder durch den Ambientemodus vorgegeben sein, wobei in Abhängigkeit von der gewählten Intensität eine Lautstärke der ausgegebenen Lieder eingestellt wird. Je höher eine jeweilige gewählte Intensität ist, desto stärker kann die jeweilige Komfortfunktion bereitgestellt werden. Je höher die Intensität ist, desto stärker können die jeweiligen Komfortfunktionen von Fahrzeuginsassen des Kraftwagens wahrgenommen werden. Je höher eine über die zweite Benutzereingabe gewählte Intensität ist, desto größer kann eine Abweichung von jeweiligen durch die gewählte Intensität vorgegebenen Werten der durch den ausgewählten Ambientemodus vorgegebenen Fahrzeugkomponenten im Vergleich zu einem Ausgangszustand der Fahrzeugkomponenten gewählt sein. Unter dem Ausgangszustand der Fahrzeugkomponenten ist eine jeweilige Standardeinstellung der Fahrzeugkomponenten zu verstehen. Bei dem Verfahren ist es weiterhin vorgesehen, dass mittels der Bedienvorrichtung ein Einstellen der durch die gewählte Intensität vorgegebenen Werte in den durch den ausgewählten Ambientemodus vorgegebenen Fahrzeugkomponenten des Kraftwagens ausgelöst wird. Das Verfahren ermöglicht somit ein besonders feines Einstellen jeweiliger Werte von in einem ausgewählten Ambientemodus zu einer Gruppe zusammengefassten Fahrzeugkomponenten über besonders wenige Benutzereingaben und insbesondere zumindest im Wesentlichen gleichzeitig.

In einer Weiterbildung der Erfindung ist es vorgesehen, dass eine Reihe direkt aufeinanderfolgender, ansteigender Intensitäten ansteigende Werte für wenigstens eine erste Fahrzeugkomponente und/oder absteigende Werte für wenigstens eine zweite Fahrzeugkomponente vorgibt. Das bedeutet, dass bei einem kontinuierlichen Ansteigen jeweiliger gewählter Intensitäten wenigstens eine der Fahrzeugkomponenten des gewählten Ambientemodus hinsichtlich ihres eingestellten Werts kontinuierlich angehoben wird oder wenigstens eine dem ausgewählten Ambientemodus zugeordnete Fahrzeugkomponente hinsichtlich ihres eingestellten Werts kontinuierlich abgesenkt wird. Die gewählte Intensität kann somit direkt proportional oder indirekt proportional zu dem zugeordneten Wert der durch den ausgewählten Ambientemodus vorgegebenen Fahrzeugkomponente vorgegeben sein. Wird somit eine Intensität eines gewählten Ambientemodus in einer Richtung verändert, dann sinkt ein jeweiliger einzustellender Wert wenigstens einer der Fahrzeugkomponenten und/oder ein einzustellender Wert wenigstens einer der Fahrzeugkomponenten steigt. Über die Bedienvorrichtung kann somit die Person vorgeben, wie intensiv der jeweilige ausgewählte Ambientemodus in dem Kraftwagen eingestellt werden soll. Hierdurch können über die gewählte Intensität jeweilige Werte der durch den Ambientemodus definierten einzustellenden Fahrzeugkomponenten gemeinsam angepasst werden.

In weiterer Ausgestaltung der Erfindung ist es vorgesehen, dass mittels der Bedienvorrichtung eine dritte Benutzereingabe empfangen wird, welche einen ausgewählten Bereich in einem Fahrzeuginnenraum des Kraftwagens charakterisiert, und das Einstellen der durch die gewählte Intensität vorgegebenen Werte in den durch den ausgewählten Ambientemodus vorgegebenen Fahrzeugkomponenten für den ausgewählten Bereich des Fahrzeuginnenraums ausgelöst wird. Das bedeutet, dass über die dritte Benutzereingabe die Person den Bereich vorgeben kann, in welchem die durch die gewählte Intensität vorgegebenen Werte der durch den ausgewählten Ambientemodus vorgegebenen Fahrzeugkomponenten einzustellen sind. Über die dritte Benutzereingabe können somit jeweilige Bereiche des Fahrzeuginnenraums des Kraftwagens individuell hinsichtlich der Intensität des ausgewählten Ambientemodus eingestellt werden. Das bedeutet, dass der in Abhängigkeit von der ersten Benutzereingabe ermittelte Ambientemodus im gesamten Fahrzeuginnenraum des Kraftwagens eingestellt werden kann, wobei jeweilige einzustellende Intensitäten des ausgewählten Ambientemodus für jeweilige Bereiche des Fahrzeuginnenraums über die dritte Benutzereingabe individuell eingestellt beziehungsweise angepasst werden können. Hierdurch kann die Intensität des ausgewählten Ambientemodus an jeweilige in unterschiedlichen Bereichen des Fahrzeuginnenraums des Kraftwagens angeordnete Fahrzeuginsassen angepasst werden. Beispielsweise kann eine Person über die Benutzereingaben den ausgewählten Ambientemodus in einem Bereich, in welchem ein Baby angeordnet ist, mit einer geringeren Intensität einstellen als in einem Bereich des Fahrzeuginnenraums, in welchem eine erwachsene Person als Fahrzeuginsasse angeordnet ist.

In einer Weiterbildung der Erfindung ist es vorgesehen, dass für ein Auswählen des Bereichs mittels der Bedienvorrichtung als vorgegebene Bereiche ein Fondraum und/oder ein Frontraum und/oder ein Beifahrerraum und/oder ein Fahrerraum des Fahrzeuginnenraums zur Auswahl bereitgestellt werden. Durch ein Vorgeben jeweiliger hinsichtlich der Intensität des ausgewählten Ambientemodus individuell einstellbare Bereiche kann die Person über die dritte Benutzereingabe besonders einfach und schnell den Bereich des Fahrzeuginnenraums auswählen, in welchem die Intensität des ausgewählten Ambientemodus über die zweite Benutzereingabe angepasst werden soll. Insbesondere können die vorgegebenen Bereiche mittels der Bedienvorrichtung ausgegeben und dafür insbesondere angezeigt werden und somit für ein Auswählen für Fahrzeuginsassen des Kraftwagens bereitgestellt werden. Hierdurch wird ermöglicht, dass der Bereich von dem Fahrzeuginsassen durch besonders wenige Betätigungen der Bedienvorrichtung und somit besonders einfach ausgewählt werden kann.

In weiterer Ausgestaltung der Erfindung ist vorgesehen, dass mittels der Bedienvorrichtung ein aus mehreren vorgegebenen Betriebsmodi des Kraftwagens ausgewählter Betriebsmodus empfangen wird, welcher wenigstens einen Bereich des Fahrzeuginnenraums charakterisiert, und dass in dem wenigstens einen durch den ausgewählten Betriebsmodus charakterisierten Bereich des Fahrzeuginnenraums der ausgewählte Ambientemodus mit der ausgewählten Intensität eingestellt wird. Hierbei können beispielsweise ein Babymodus und/oder ein Haustiermodus als Betriebsmodi vorgegeben sein. Hierbei kann beispielsweise in dem Babymodus als Betriebsmodus vorgegeben sein, dass in dem Fondbereich des Fahrzeuginnenraums die Intensität des gewählten Ambientemodus besonders niedrig ist. Bei dem Haustiermodus kann beispielsweise vorgegeben sein, dass in einem Gepäckraum als definierten Bereich des Fahrzeuginnenraums des Kraftwagens die Intensität des ausgewählten Ambientemodus besonders gering einzustellen ist. Hierbei kann ein absoluter Wert oder ein relativer Wert für die Intensität durch den gewählten Betriebsmodus vorgegeben sein. Ist in dem jeweiligen gewählten Betriebsmodus eine absolute Intensität für den durch den Betriebsmodus charakterisierten Bereich vorgegeben, dann sind die in den Fahrzeugkomponenten einzustellenden Werte unabhängig von jeweiligen in den durch den Ambientemodus charakterisierten Fahrzeugkomponenten einzustellenden Werten anderer Bereiche des Fahrzeuginnenraums des Kraftwagens. Über die jeweiligen Betriebsmodi können somit jeweiligen Fahrzeuginsassen vorgegebene Beispielsituationen zur Auswahl vorgegeben werden, wie der Babymodus oder der Haustiermodus, welche von einem Fahrzeuginsassen über die Bedienvorrichtung ausgewählt werden können, insbesondere wenn eine reale Situation in dem Kraftwagen einer der vorgegebenen Beispielsituationen entspricht und somit ein Baby und/oder ein Haustier wie beispielsweise ein Hund in dem Kraftwagen angeordnet sind. Hierdurch wird Fahrzeuginsassen des Kraftwagens ermöglicht, die jeweilige Intensität des ausgewählten Ambientemodus besonders einfach an eine jeweilige Situation im Fahrzeuginnenraum des Kraftwagens mittels der Bedienvorrichtung anzupassen.

In weiterer Ausgestaltung der Erfindung ist es vorgesehen, dass durch die vorgegebenen Betriebsmodi die jeweiligen Verhältnisse der durch die gewählten Intensitäten vorgegebenen Werte für die durch den ausgewählten Ambientemodus vorgegebenen Fahrzeugkomponenten zwischen jeweiligen Bereichen des Fahrzeuginnenraums vorgegeben sind. Das bedeutet, dass die jeweiligen Betriebsmodi relative Verhältnisse der Intensitäten in jeweiligen zueinander unterschiedlichen Bereichen des Fahrzeuginnenraums des Kraftwagens für den eingestellten Ambientemodus vorgeben. Das bedeutet, dass über den gewählten Betriebsmodus vorgegeben wird, welches Verhältnis jeweilige in den Fahrzeugkomponenten eingestellte Werte für einen ersten Bereich im Vergleich zu jeweiligen in den Fahrzeugkomponenten eingestellten Werten für einen zweiten, zu dem ersten Bereich unterschiedlichen Bereich aufweisen. Folglich werden bei einem Anpassen der Intensität des ausgewählten Ambientemodus in dem ersten Bereich des Fahrzeuginnenraums des Kraftwagens über das durch den Betriebsmodus vorgegebene Verhältnis die Intensität und somit die Werte der durch den ausgewählten Ambientemodus vorgegebenen Fahrzeugkomponenten für den zweiten Bereich automatisch in Abhängigkeit von dem vorgegebenen Verhältnis angepasst. Hierdurch können jeweilige für unterschiedliche Bereiche des Fahrzeuginnenraums vorgesehene unterschiedliche Intensitäten des ausgewählten Ambientemodus besonders einfach und zumindest im Wesentlichen gleichzeitig angepasst werden.

In weiterer Ausgestaltung der Erfindung ist es vorgesehen, dass die Bedienvorrichtung eine eine berührempfindliche Oberfläche aufweisende Bildschirmeinrichtung, ein die Bildschirmeinrichtung ringförmig umschließendes Ringelement und ein Basiselement umfasst, relativ zu welchem das Ringelement um eine Drehachse drehbar ist. Mittels der Bedienvorrichtung wird bei einer ermittelten Berührung der berührempfindlichen Oberfläche die erste Benutzereingabe und/oder die dritte Benutzereingabe festgestellt. Alternativ oder zusätzlich ist es vorgesehen, dass bei einem ermittelten Drehen des Ringelements um die Drehachse relativ zu dem Basiselement die zweite Benutzereingabe festgestellt wird. Die Bedienvorrichtung ermöglicht somit, dass die Benutzereingaben über besonders wenige einzelne Bedienelemente der Bedienvorrichtung empfangen werden können. Somit ist ein besonders einfacher Aufbau der Bedienvorrichtung möglich. Über besonders wenige Bedienelemente können somit mittels der Bedienvorrichtung über den ausgewählten Ambientemodus und über die ausgewählte Intensität sowie gegebenenfalls über die ausgewählten Bereiche besonders viele Fahrzeugkomponenten gleichzeitig gesteuert werden. Weiterhin kann über das Aufteilen der Zuständigkeiten zum Empfangen der Benutzereingaben auf die berührempfindliche Oberfläche und das Ringelement eine Verwechslungsgefahr für jeweilige empfangene Benutzereingaben besonders gering gehalten werden, wodurch ein besonders sicheres Detektieren der ersten Benutzereingabe, der zweiten Benutzereingabe und der dritten Benutzereingabe ermöglicht wird.

In weiterer Ausgestaltung der Erfindung ist vorgesehen, dass bei Ermitteln einer Streichbewegung über die berührempfindliche Oberfläche die erste Benutzereingabe oder die dritte Benutzereingabe ermittelt wird. Das bedeutet, dass die erste Benutzereingabe oder die dritte Benutzereingabe bei einem ermittelten Wischen über die berührempfindliche Oberfläche festgestellt wird. Hierbei kann über das Wischen zwischen jeweiligen zur Verfügung gestellten Ambientemodi beziehungsweise Betriebsmodi gewechselt werden. Das Ermitteln der ersten Benutzereingabe oder der dritten Benutzereingabe bei dem Feststellen des Streichens über die berührempfindliche Oberfläche ermöglicht für den Fahrzeuginsassen ein besonders einfaches und intuitives Bereitstellen der ersten Benutzereingabe beziehungsweise der dritten Benutzereingabe.

In weiterer Ausgestaltung der Erfindung ist es vorgesehen, dass bei Ermitteln einer ersten Streichbewegung in einer ersten Richtung über die berührempfindliche Oberfläche die erste Benutzereingabe ermittelt wird und bei Ermitteln einer zweiten Streichbewegung in einer zu der ersten Richtung unterschiedlichen, zweiten Richtung über die berührempfindliche Oberfläche die dritte Benutzereingabe ermittelt wird. Hierbei können die erste Richtung und die zweite Richtung einen Winkel von 60 bis 90 Grad, insbesondere einen Winkel von zirka 90 Grad einschließen. Wird somit das Streichen der Person entlang der berührempfindlichen Oberfläche in der ersten Richtung ermittelt, dann wird festgestellt, dass die erste Benutzereingabe getätigt worden ist. Wird ermittelt, dass die Person in der zweiten Richtung über die berührempfindliche Oberfläche streicht, dann wird festgestellt, dass die dritte Benutzereingabe getätigt worden ist. Durch das Aufteilen der ersten Benutzereingabe und der dritten Benutzereingabe auf die erste Richtung und die zweite Richtung, welche insbesondere mit einem gewissen Toleranzbereich hinsichtlich ihrer Ausrichtung vorgegeben sein können, kann eine Verwechslungsgefahr der ersten Benutzereingabe zur dritten Benutzereingabe besonders gering gehalten werden. Eine Gefahr dafür, dass der Fahrzeuginsasse die erste Benutzereingabe tätigen wollte und mittels der Bedienvorrichtung die dritte Benutzereingabe ermittelt worden ist, beziehungsweise eine Gefahr dafür, dass der Fahrzeuginsasse die dritte Benutzereingabe tätigen wollte und mittels der Bedienvorrichtung die erste Benutzereingabe festgestellt worden ist, kann hierdurch besonders gering gehalten werden. Hierdurch wird ein besonders einfaches und präzises Einstellen der jeweiligen Intensitäten in unterschiedlichen Bereichen des Fahrzeuginnenraums des Kraftwagens für den ausgewählten Ambientemodus ermöglicht.

Die Erfindung betrifft des Weiteren einen Kraftwagen, insbesondere einen Personenkraftwagen, mit einer Bedienvorrichtung und mit mehreren Fahrzeugkomponenten, wobei der Kraftwagen dazu eingerichtet ist, in einem Verfahren, wie es bereits im Zusammenhang mit dem erfindungsgemäßen Verfahren beschrieben worden ist, betrieben zu werden. Das bedeutet, dass die Bedienvorrichtung dazu eingerichtet ist, eine erste Benutzereingabe und eine zweite Benutzereingabe und gegebenenfalls zusätzlich eine dritte Benutzereingabe zu empfangen und in Abhängigkeit von den empfangenen Benutzereingaben jeweilige Werte in den Fahrzeugkomponenten einzustellen. Hierbei kann die Bedienvorrichtung dazu eingerichtet sein, ein Einstellen von durch eine gewählte Intensität vorgegebenen Werten in durch einen ausgewählten Ambientemodus vorgegebenen Fahrzeugkomponenten auszulösen. Vorteile und vorteilhafte Weiterbildungen des erfindungsgemäßen Verfahrens sind als Vorteile und vorteilhafte Weiterbildungen des erfindungsgemäßen Kraftwagens anzusehen und umgekehrt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Betätigungsschema für eine Bedienvorrichtung, mittels welcher ein Ambientemodus und eine dem Ambientemodus zugeordnete Intensität auswählbar sind, wobei die ausgewählte Intensität einzustellende Werte für durch den ausgewählten Ambientemodus vorgegebene Fahrzeugkomponenten eines die Bedienvorrichtung aufweisenden Kraftwagens charakterisiert; und
- Fig. 2: ein Verfahrensschema für ein Einstellen jeweiliger unterschiedlicher Intensitäten eines ausgewählten Ambientemodus in zueinander unterschiedlichen Bereichen eines Fahrzeuginnenraums des Kraftwagens.

Gleiche oder funktionsgleiche Elemente sind in den Figuren mit den gleichen Bezugszeichen versehen.

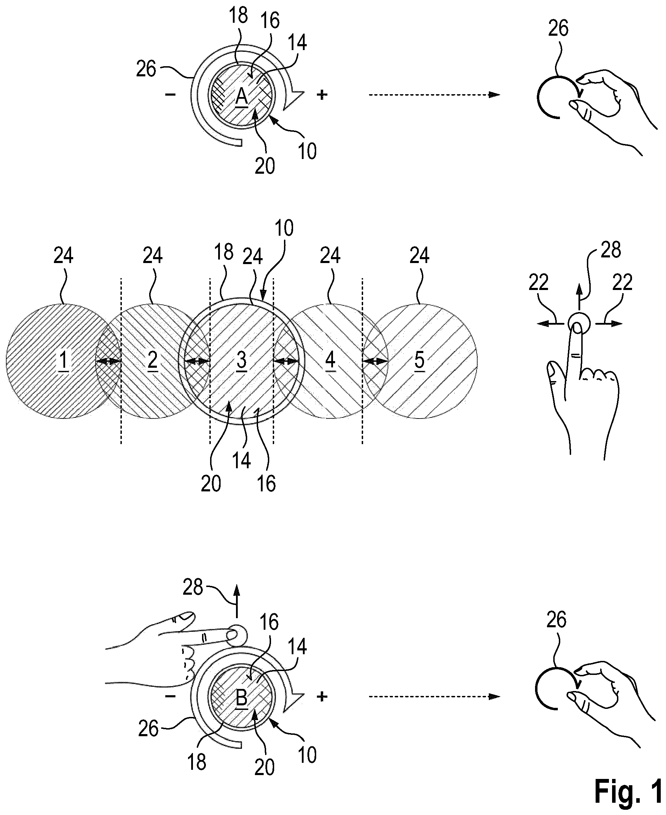

In Fig. 1 ist ein Bedienschema für eine Bedienvorrichtung 10 eines Kraftwagens 12 gezeigt. Über die Bedienvorrichtung 10 ist wenigstens eine Fahrzeugkomponente des Kraftwagens 12 steuerbar. Die Bedienvorrichtung 10 weist vorliegend eine Bildschirmeinrichtung 14 mit einer berührempfindlichen Oberfläche 16 sowie ein Ringelement 18 auf. Weiterhin kann die Bedienvorrichtung 10 ein in den Fig. nicht gezeigtes Basiselement aufweisen, relativ zu welchem das Ringelement 18 in unterschiedlichen Drehstellungen um eine Drehachse anordenbar ist. Vorliegend umschließt das Ringelement 18 eine eine Anzeige 20 bereitstellende Außenoberfläche der Bildschirmeinrichtung 14 umfangsseitig. Mittels der Anzeige 20 kann eine über die Bedienvorrichtung 10 vorgenommene Einstellung oder wenigstens eine für ein Auswählen bereitstehende Einstellung angezeigt werden.

Die Bedienvorrichtung 10 ist dazu eingerichtet, eine durch ein Streichen, insbesondere ein Wischen, über die berührempfindliche Oberfläche 16 repräsentierte erste Benutzereingabe 22 zu empfangen. Die erste Benutzereingabe 22 charakterisiert eine Auswahl eines in dem Kraftwagen 12 einzustellenden Ambientemodus 24 aus mehreren vorgegebenen, zur Auswahl stehenden Ambientemodi 24. Durch Wischen nach rechts oder nach links kann die Person, insbesondere der Fahrzeuginsasse, bei dem Berühren der berührsensitiven Oberfläche 16 zwischen den mehreren vorgegebenen Ambientemodi 24 wechseln. Vorliegend ist der dritte Ambientemodus 3 eingestellt. Durch Wischen nach links kann ein vierter Ambientemodus 4 eingestellt werden oder durch Wischen nach rechts kann ein zweiter Ambientemodus 2 ausgewählt werden. Die jeweiligen Ambientemodi 24 charakterisieren jeweils eine Gruppe von gemeinsam einzustellenden, jeweils eine Komfortfunktion bereitstellenden Fahrzeugkomponenten des Kraftwagens 12. Das bedeutet, dass durch jeden Ambientemodus 24 eine eigene Gruppe an Fahrzeugkomponenten des Kraftwagens 12 vorgegeben sein kann, welche gemeinsam über die Bedienvorrichtung 10 eingestellt werden können. Infolge des Auswählens eines der Ambientemodi 24 kann ein Einstellen von durch den ausgewählten Ambientemodus 24 vorgegebenen Werte für die dem ausgewählten Ambientemodus 24 zugeordneten Fahrzeugkomponenten ausgelöst werden.

Um die jeweiligen Werte der durch den ausgewählten Ambientemodus 24 vorgegebenen Fahrzeugkomponenten besonders einfach gemeinsam anpassen zu können, ist die Bedienvorrichtung 10 dazu eingerichtet, eine zweite Benutzereingabe 26 zu empfangen. Diese zweite Benutzereingabe 26 ist durch ein Verstellen des Ringelements 18 um die Drehachse relativ zu dem Basiselement der Bedienvorrichtung 10 charakterisiert. Diese zweite Benutzereingabe 26 charakterisiert eine ausgewählte einzustellende Intensität des ausgewählten Ambientemodus 24. Hierbei kann jede für das Ringelement 18 vorgegebene Drehstellung eine einzustellende Intensität charakterisieren. Durch Einstellen des Ringelements 18 in einer jeweiligen Drehstellung kann somit die der Drehstellung zugeordnete Intensität ausgewählt werden. Die ausgewählte Intensität gibt jeweilige einzustellende Werte für die durch den ausgewählten Ambientemodus 24 vorgegebene Gruppe an Fahrzeugkomponenten vor. Über das Drehen des Ringelements 18 um die Drehachse kann somit die Intensität zwischen einem minimalen Wert und einem maximalen Wert erstellt werden, insbesondere in vorgegebenen Stufen oder stufenlos. Jeweilige ansteigende Intensitäten können dabei sich kontinuierlich in eine Richtung verändernde Werte wenigstens einer der Fahrzeugkomponenten der durch den Ambientemodus 24 vorgegebenen Gruppe an Fahrzeugkomponenten auslösen. Insbesondere können über das Einstellen der Intensität jeweilige Werte mehrerer Fahrzeugkomponenten gleichzeitig eingestellt werden. Die Bedienvorrichtung 10 ermöglicht somit, dass über jeweilige Makrobefehle, vorliegend das Auswählen des Ambientemodus 24 beziehungsweise das Auswählen der Intensität, mehrere Fahrzeugkomponenten gleichzeitig und gemeinsam gesteuert werden können. Hierdurch können Fahrzeuginsassen jeweilige durch die Fahrzeugkomponenten bereitgestellte Komfortfunktionen besonders einfach und schnell über die jeweiligen Benutzereingaben 22, 26 steuern.

Mittels der Bedienvorrichtung 10 kann des Weiteren eine dritte Benutzereingabe 28 empfangen werden. Diese dritte Benutzereingabe 28 ist insbesondere durch ein Streichen beziehungsweise Wischen über die berührempfindliche Oberfläche 16 der Bildschirmeinrichtung 14 charakterisiert. Hierbei kann die erste Benutzereingabe 22 durch eine erste Streichbewegung in einer ersten Richtung über die berührempfindliche Oberfläche 16 repräsentiert sein und die dritte Benutzereingabe 28 kann als eine zweite Streichbewegung in einer zu der ersten Richtung unterschiedlichen, zweiten Richtung über die berührempfindliche Oberfläche 16 der Bildschirmeinrichtung 14 charakterisiert sein. Insbesondere kann die Person als Benutzereingabe über die berührempfindliche Oberfläche 16 nach oben oder nach unten wischen, um einen jeweiligen Bereich A, B des Fahrzeuginnenraums 30 auszuwählen. Der jeweilige ausgewählte Bereich kann über die Anzeige 20 angezeigt werden. Hierbei kann über die dritte Benutzereingabe 28 die Person den Bereich des Fahrzeuginnenraums 30 aus mehreren vorgegebenen Bereichen A, B auswählen. Für das Auswählen können als Bereiche ein Frontraum A und/oder ein Fondraum B und/oder ein Beifahrerraum und/oder ein Fahrerraum des Fahrzeuginnenraums 30 zur Auswahl bereitgestellt werden. Die Person kann somit über die dritte Benutzereingabe 28 den Bereich des Fahrzeuginnenraums 30 auswählen, in welchem die durch den ausgewählten Ambientemodus 24 charakterisierten Fahrzeugkomponenten mit der ausgewählten Intensität die Komfortfunktionen bereitstellen sollen. Durch Wischen über die berührsensitive Oberfläche 16 nach oben oder nach unten können somit über jeweilige zweite Benutzereingaben 26 in unterschiedlichen Bereichen des Fahrzeuginnenraums 30 die Intensität der dem ausgewählten Ambientemodus 24 zugeordneten, durch die Fahrzeugkomponenten bereitzustellenden Komfortfunktionen eingestellt werden.

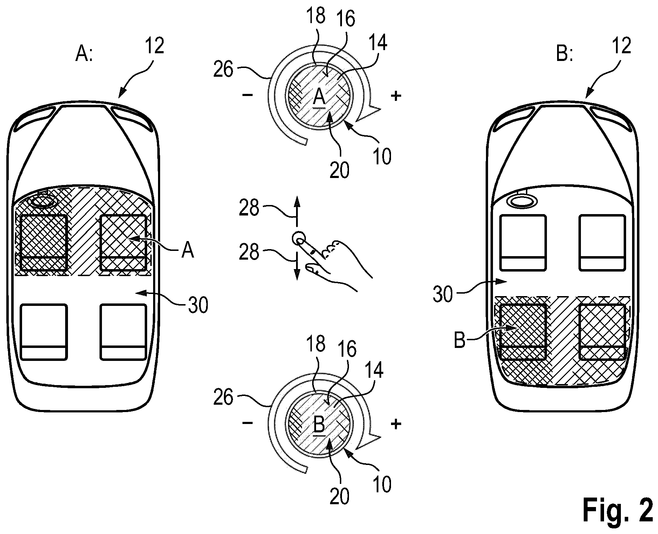

Ein separates Einstellen der jeweiligen Intensitäten des ausgewählten Ambientemodus 24 in unterschiedlichen Bereichen A, B des Fahrzeuginnenraums 30 ist in Fig. 2 dargestellt. Ist mittels der Bedienvorrichtung 10 der Frontraum A ausgewählt, dann kann über die zweite Benutzereingabe 26 die Intensität für den Frontraum A vorgegeben werden. Anschließend kann über die dritte Benutzereingabe 28 der Frontraum A abgewählt und der Fondraum B angewählt werden. Anschließend kann über eine weitere zweite Benutzereingabe 26 die Intensität für den Fondraum B vorgegeben werden. Hierbei kann die vorher eingestellte Intensität des Frontraums A während des Einstellens der Intensität des Fondraums B unverändert bleiben.

Über die Anzeige 20 können die unterschiedlichen Bereiche A, B und/oder unterschiedliche Betriebsmodi des Kraftwagens 12 zur Auswahl gestellt werden. Die jeweiligen Betriebsmodi charakterisieren jeweils wenigstens einen Bereich des Fahrzeuginnenraums 30. Wird mittels der Bedienvorrichtung 10 ein aus den mehreren vorgegebenen Betriebsmodi ausgewählter Betriebsmodus empfangen, dann kann für den wenigstens einen durch den ausgewählten Betriebsmodus charakterisierten Bereich des Fahrzeuginnenraums 30 der ausgewählte Ambientemodus 24 mit der ausgewählten Intensität eingestellt werden. Beispielsweise können mittels der Bedienvorrichtung 10 als Betriebsmodi ein Babymodus oder ein Haustiermodus vorgegeben werden. Durch den Babymodus beziehungsweise den Haustiermodus kann wenigstens ein Bereich in dem Fahrzeuginnenraum 30 des Kraftwagens 12 vorgegeben werden, in welchem der ausgewählte Ambientemodus 24 mit einer besonders geringen Intensität, insbesondere mit einer im Vergleich zu wenigstens einem weiteren Bereich des Fahrzeuginnenraums 30 im Verhältnis besonders geringen Intensität eingestellt wird. Über das Wählen der Intensität kann somit die Person die jeweiligen in den durch den ausgewählten Ambientemodus 24 charakterisierten Fahrzeugkomponenten einzustellenden Werte für die unterschiedlichen Bereiche vorgeben, wobei die Werte für die unterschiedlichen Bereiche in Abhängigkeit von dem eingestellten Betriebsmodus in dem durch den eingestellten Betriebsmodus vorgegebenen Verhältnis zueinander eingestellt werden.

Bei dem Verfahren zum Betreiben des Kraftwagens 12 können somit jeweilige durch den ausgewählten Ambientemodus 24 durch jeweilige vorgegebene Fahrzeugkomponenten bereitgestellte Komfortfunktionen zumindest im Wesentlichen gleichzeitig, besonders einfach und insbesondere graduell eingestellt werden. Hierbei besteht die Option, die Komfortfunktionen in unterschiedlichen Bereichen A, B des Fahrzeuginnenraums 30 des Kraftwagens 12 zueinander separat anzupassen. Hierdurch kann ein Fahrzeuginsasse die Komfortfunktionen individualisieren, wobei das Verfahren gleichzeitig ein besonders einfaches Anpassen besonders vieler unterschiedlicher Komfortfunktionen über besonders wenige Benutzereingaben ermöglicht. Das Einstellen des ausgewählten Ambientemodus 24 mit unterschiedlichen Intensitäten in unterschiedlichen Bereichen A, B des Fahrzeuginnenraums 30 des Kraftwagens 12 ermöglicht ein besonders energieeffizientes Bereitstellen der Komfortfunktionen, indem die Komfortfunktionen in einem Bereich mit einem höheren Bedarf intensiver bereitgestellt werden können als in einem Bereich mit einem im Vergleich dazu niedrigeren Bedarf von Fahrzeuginsassen für die Komfortfunktionen. Die Bedienvorrichtung 10 ist insbesondere intuitiv von einem Fahrzeuginsassen bedienbar und ermöglicht eine besonders große Flexibilität beim Einstellen jeweiliger Komfortfunktionen im Fahrzeuginnenraum 30 des Kraftwagens 12.

Das Verfahren ermöglicht ein Personalisieren jeweiliger Komfortfunktionen sowie ein besonders einfaches Einstellen der jeweiligen Komfortfunktionen über die Bedienvorrichtung 10. Weiterhin ermöglicht das Verfahren ein besonders energieeffizientes Betreiben des Kraftwagens 12, insbesondere wenn ein Fahrzeuginsasse Komfortfunktionen in dem Fondbereich B über die ausgewählte Intensität auf ein mögliches Minimum einstellt, wenn in dem Fondbereich B für die Komfortfunktionen kein Bedarf besteht. Das Verfahren ermöglicht das separate Steuern der Komfortfunktionen in den unterschiedlichen Bereichen A, B des Fahrzeuginnenraums 30 des Kraftwagens 12, wodurch die Komfortfunktionen an einen jeweiligen Bedarf von Fahrzeuginsassen unterschiedlichsten Alters in dem Fahrzeuginnenraum 30, wie bei einer in dem Fahrzeuginnenraum 30 angeordneten Familie, angepasst werden können.

### Bezugszeichenliste

- 10: Bedienvorrichtung
- 12: Kraftwagen
- 14: Bildschirmeinrichtung
- 16: berührempfindliche Oberfläche
- 18: Ringelement
- 20: Anzeige
- 22: erste Benutzereingabe
- 24: Ambientemodus
- 26: zweite Benutzereingabe
- 28: dritte Benutzereingabe
- 30: Fahrzeuginnenraum
- A, B: Bereich

## Patentansprüche

1. Verfahren zum Betreiben eines Kraftwagens (12), bei welchem mittels einer Bedienvorrichtung (10)
- eine erste Benutzereingabe (22) empfangen wird, welche eine Auswahl eines einzustellenden Ambientemodus (24) aus mehreren vorgegebenen Ambientemodi (24) charakterisiert, welche jeweils eine Gruppe von gemeinsam einzustellenden, jeweils eine Komfortfunktion bereitstellenden Fahrzeugkomponenten des Kraftwagens (12) definieren,
- eine zweite Benutzereingabe (26) empfangen wird, welche eine ausgewählte, einzustellende Intensität des ausgewählten Ambientemodus (24) definiert, wobei die ausgewählte Intensität jeweilige einzustellende Werte für die Gruppe an Fahrzeugkomponenten vorgibt, und
- ein Einstellen der durch die gewählte Intensität vorgegebenen Werte in den durch den ausgewählten Ambientemodus (24) vorgegebenen Fahrzeugkomponenten des Kraftwagens (12) ausgelöst wird.

2. Verfahren nach Anspruch 1, wobei eine Reihe direkt aufeinander folgender, ansteigender Intensitäten ansteigende Werte für wenigstens eine erste Fahrzeugkomponente und/oder absteigende Werte für wenigstens eine zweite Fahrzeugkomponente vorgibt.

3. Verfahren nach Anspruch 1 oder 2, wobei mittels der Bedienvorrichtung (10) eine dritte Benutzereingabe (28) empfangen wird, welche einen ausgewählten Bereich (A, B) in einem Fahrzeuginnenraum (30) des Kraftwagens (12) charakterisiert, und das Einstellen der durch die gewählten Intensität vorgegebenen Werte in den durch den ausgewählten Ambientemodus (24) vorgegebenen Fahrzeugkomponenten in dem ausgewählten Bereich (A, B) des Fahrzeuginnenraums (30) ausgelöst wird.

4. Verfahren nach Anspruch 3, wobei für ein Auswählen des Bereichs (A, B) mittels der Bedienvorrichtung (10) als vorgegebene Bereiche ein Fondraum (B) und/oder ein Frontraum (A) und/oder ein Beifahrerraum und/oder ein Fahrerraum des Fahrzeuginnenraums (30) zur Auswahl bereitgestellt werden.

5. Verfahren nach einem der vorhergehenden Ansprüche, wobei mittels der Bedienvorrichtung (10) ein aus mehreren vorgegebenen Betriebsmodi des Kraftwagens (12) ausgewählter Betriebsmodus empfangen wird, welcher wenigstens einen Bereich (A, B) des Fahrzeuginnenraums (30) charakterisiert, und in dem wenigstens einen durch den ausgewählten Betriebsmodus charakterisierten Bereich (A, B) des Fahrzeuginnenraums (30) der ausgewählte Ambientemodus (24) mit der ausgewählten Intensität eingestellt wird.

6. Verfahren nach Anspruch 5, wobei durch die vorgegebenen Betriebsmodi jeweilige Verhältnisse der durch die gewählten Intensitäten vorgegebenen Werte für die durch den ausgewählten Ambientemodus (24) vorgegebenen Fahrzeugkomponenten zwischen jeweiligen Bereichen (A, B) des Fahrzeuginnenraums (30) vorgegeben sind.

7. Verfahren nach einem der vorhergehenden Ansprüche, wobei die Bedienvorrichtung (10) eine eine berührempfindliche Oberfläche (16) aufweisende Bildschirmeinrichtung (14), ein die Bildschirmeinrichtung (14) ringförmig umschließendes Ringelement (18) und ein Basiselement umfasst, relativ zu welchem das Ringelement (18) um eine Drehachse drehbar ist, wobei mittels der Bedienvorrichtung (10) bei einer ermittelten Berührung der berührempfindlichen Oberfläche (16) die erste Benutzereingabe (22) und/oder - dies in Rückbezug auf Anspruch 3 - die dritte Benutzereingabe (28) ermittelt werden/wird und/oder bei einem ermittelten Drehen des Ringelements (18) um die Drehachse relativ zu dem Basiselement die zweite Benutzereingabe (26) ermittelt wird.

8. Verfahren nach Anspruch 7, wobei bei Ermitteln einer Streichbewegung über die berührempfindliche Oberfläche (16) die erste Benutzereingabe (22) oder die dritte Benutzereingabe (26) ermittelt wird.

9. Verfahren nach Anspruch 8, wobei bei Ermitteln einer ersten Streichbewegung in einer ersten Richtung über die berührempfindliche Oberfläche (16) die erste Benutzereingabe (22) ermittelt wird, und bei Ermitteln einer zweiten Streichbewegung in einer zu der ersten Richtung unterschiedlichen, zweiten Richtung über die berührempfindliche Oberfläche (16) die dritte Benutzereingabe (28) ermittelt wird.

10. Kraftwagen (12), mit einer Bedienvorrichtung (10) und mit mehreren Fahrzeugkomponenten, welcher dazu eingerichtet ist, in einem Verfahren nach einem der vorhergehenden Ansprüche betrieben zu werden.

## Claims

1. Method for operating a motor vehicle (12), in which, by means of an operator control apparatus (10),
- a first user input (22) is received, which characterizes a selection of an ambient mode (24) to be set from multiple predetermined ambient modes (24) which each define a group of vehicle components of the motor vehicle (12) that are to be set together and each provide a comfort function,
- a second user input (26) is received, which defines a selected intensity to be set for the selected ambient mode (24), wherein the selected intensity predetermines the respective values to be set for the group of vehicle components, and
- setting the values predetermined by the selected intensity in the vehicle components of the motor vehicle (12) predetermined by the selected ambient mode (24) is triggered.

2. Method according to claim 1, wherein a series of directly successive, increasing intensities predetermines increasing values for at least a first vehicle component and/or decreasing values for at least a second vehicle component.

3. Method according to claim 1 or 2, wherein, by means of the operator control apparatus (10), a third user input (28) is received, which characterizes a selected region (A, B) in a vehicle interior (30) of the motor vehicle (12), and setting the values predetermined by the selected intensity in the vehicle components predetermined by the selected ambient mode (24) in the selected region (A, B) of the vehicle interior (30) is triggered.

4. Method according to claim 3, wherein to select the region (A, B) by means of the operator control apparatus (10), a rear compartment (B) and/or a front compartment (A) and/or a passenger compartment and/or a driver compartment of the vehicle interior (30) are provided as predetermined regions for selection.

5. Method according to any of the preceding claims, wherein, by means of the operator control apparatus (10), an operating mode is received, which is selected from multiple predetermined operating modes of the motor vehicle (12), characterizes at least one region (A, B) of the vehicle interior (30), and in which at least one region (A, B) of the vehicle interior (30) **characterized by** the selected operating mode the selected ambient mode (24) is set with the selected intensity.

6. Method according to claim 5, wherein the predetermined operating modes predetermine respective ratios of the values predetermined by the selected intensities for the vehicle components predetermined by the selected ambient mode (24) between respective regions (A, B) of the vehicle interior (30).

7. Method according to any of the preceding claims, wherein the operator control apparatus (10) comprises a screen device (14) having a touch-sensitive surface (16), a ring element (18) enclosing the screen device (14) in a ring shape, and a base element relative to which the ring element (18) is rotatable about an axis of rotation, wherein, by means of the operating device (10), the first user input (22) and/or - with reference to claim 3 - the third user input (28) is/are detected when a touch is detected on the touch-sensitive surface (16), and/or the second user input (26) is detected when a rotation of the ring element (18) about the axis of rotation relative to the base element is detected.

8. Method according to claim 7, wherein the first user input (22) or the third user input (26) is detected when a swiping movement is detected over the touch-sensitive surface (16).

9. Method according to claim 8, wherein the first user input (22) is detected when a first swiping movement in a first direction is detected over the touch-sensitive surface (16), and the third user input (28) is detected when a second swiping movement in a second direction different from the first direction is detected over the touch-sensitive surface (16).

10. Motor vehicle (12), which has an operator control apparatus (10) and multiple vehicle components and is designed to be operated in a method according to any of the preceding claims.

## Revendications

1. Procédé permettant de faire fonctionner un véhicule automobile (12), dans lequel, au moyen d'un dispositif de commande (10)
- une première entrée utilisateur (22) est reçue, laquelle caractérise une sélection d'un mode d'ambiance (24) à régler parmi plusieurs modes d'ambiance (24) prédéfinis, lesquels définissent respectivement un groupe de composants de véhicule du véhicule automobile (12) à régler en commun et fournissant respectivement une fonction de confort,
- une deuxième entrée d'utilisateur (26) est reçue, laquelle définit une intensité sélectionnée à régler du mode d'ambiance (24) sélectionné, dans lequel l'intensité sélectionnée fournit des valeurs respectives à régler pour le groupe de composants de véhicule, et
- un réglage des valeurs prédéfinies par l'intensité sélectionnée est déclenché dans les composants de véhicule du véhicule automobile (12) prédéfinis par le mode d'ambiance (24) sélectionné.

2. Procédé selon la revendication 1, dans lequel une série d'intensités croissantes directement successives prédéfinit des valeurs croissantes pour au moins un premier composant de véhicule et/ou des valeurs décroissantes pour au moins un second composant de véhicule.

3. Procédé selon la revendication 1 ou 2, dans lequel une troisième entrée utilisateur (28) est reçue au moyen du dispositif de commande (10), laquelle caractérise une zone (A, B) sélectionnée dans un habitacle de véhicule (30) du véhicule automobile (12), et le réglage des valeurs prédéfinies par l'intensité sélectionnée est déclenché dans les composants de véhicule prédéfinis par le mode d'ambiance (24) sélectionné dans la zone (A, B) sélectionnée de l'habitacle de véhicule (30).

4. Procédé selon la revendication 3, dans lequel, pour une sélection de la zone (A, B) au moyen du dispositif de commande (10), un espace arrière (B) et/ou un espace avant (A) et/ou un espace passager et/ou un espace conducteur de l'habitacle de véhicule (30) sont mis à disposition pour la sélection en tant que zones prédéfinies.

5. Procédé selon l'une des revendications précédentes, dans lequel un mode de fonctionnement sélectionné parmi plusieurs modes de fonctionnement prédéfinis du véhicule automobile (12) est reçu au moyen du dispositif de commande (10), lequel mode de fonctionnement caractérise au moins une zone (A, B) de l'habitacle de véhicule (30), et dans l'au moins une zone (A, B) de l'habitacle de véhicule (30) **caractérisée par** le mode de fonctionnement sélectionné, le mode d'ambiance (24) sélectionné est réglé avec l'intensité sélectionnée.

6. Procédé selon la revendication 5, dans lequel des rapports respectifs des valeurs prédéfinies par les intensités sélectionnées sont prédéfinis par les modes de fonctionnement prédéfinis pour les composants de véhicule prédéfinis par le mode d'ambiance (24) sélectionné entre des zones (A, B) respectives de l'habitacle de véhicule (30).

7. Procédé selon l'une des revendications précédentes, dans lequel le dispositif de commande (10) comprend un appareil formant écran (14) présentant une surface sensible au toucher (16), un élément annulaire (18) entourant l'appareil formant écran (14) de manière annulaire et un élément formant base par rapport auquel l'élément annulaire (18) peut tourner autour d'un axe de rotation, dans lequel la première entrée utilisateur (22) et/ou - ceci en référence à la revendication 3 - la troisième entrée utilisateur (28) sont déterminées au moyen du dispositif de commande (10) lors d'un contact déterminé de la surface sensible au toucher (16) et/ou la deuxième entrée utilisateur (26) est déterminée lors d'une rotation déterminée de l'élément annulaire (18) autour de l'axe de rotation par rapport à l'élément formant base.

8. Procédé selon la revendication 7, dans lequel, lors de la détermination d'un mouvement de balayage sur la surface sensible au toucher (16), la première entrée utilisateur (22) ou la troisième entrée utilisateur (26) est déterminée.

9. Procédé selon la revendication 8, dans lequel, lors de la détermination d'un premier mouvement de balayage dans une première direction sur la surface sensible au toucher (16), la première entrée utilisateur (22) est déterminée, et, lors de la détermination d'un second mouvement de balayage dans une seconde direction différente de la première direction sur la surface sensible au toucher (16), la troisième entrée utilisateur (28) est déterminée.

10. Véhicule automobile (12), comportant un dispositif de commande (10) et comportant plusieurs composants de véhicule, lequel est configuré pour fonctionner dans un procédé selon l'une des revendications précédentes.
